# EUROPEAN PATENT APPLICATION

(11) **EP 4 836 267 A1**
(43) Date of publication of application: **04.11.2026**
(21) Application number: 25869562.6
(22) Date of filing: 07.07.2025
(51) Int. Cl.: H02M 1/32, H02J 7/00

(54) **PRE-CHARGE CIRCUIT AND ENERGY STORAGE POWER SOURCE**

(30) Priority: 13.03.2025 CN 202510296858
(71) Applicant: SHENZHEN POWEROAK NEWENER CO., LTD, Shenzhen, Guangdong 518000 (CN)
(72) Inventor: QIN, Geng, Shenzhen, Guangdong 518000 (CN); YOU, Yongliang, Shenzhen, Guangdong 518000 (CN); MENG, Zhongping, Shenzhen, Guangdong 518000 (CN); LIANG, Jiakai, Shenzhen, Guangdong 518000 (CN)
(74) Representative: Zacco Sweden AB
(86) International application number: PCT/CN2025/107328
(87) International publication number: WO 2026/188703

(57) **Abstract**

The present application relates to a pre-charge circuit and an energy storage power supply. The pre-charge circuit includes: a power supply module, a power supply control module, a pre-charge module, and a pre-charge control module connected in sequence. The pre-charge control module is configured to receive an input power supply and control conduction between a pre-charge path of the pre-charge module and the power supply control module based on the input power supply. The pre-charge module is configured to pre-charge the energy storage element by the input power supply through the pre-charge path when both the pre-charge path and the power supply control module are conductive. The power supply control module is configured to control a power supply path of the power supply module to be disconnected when the power supply control module is conductive, be in a disconnected state when a voltage received by the power supply control module is less than a preset voltage threshold, and control conduction of the power supply path of the power supply module through the pre-charge control module. The power supply module is configured to supply power by the input power supply to the energy storage element through the power supply path when the power supply path is conductive. The pre-charge circuit can reduce hardware costs.

## Description

### CROSS-REFERENCE TO RELATED APPLICATIONS

The present application claims priority to Chinese patent application No. 2025102968585, filed on March 13, 2025, and entitled "PRE-CHARGE CIRCUIT AND ENERGY STORAGE POWER SUPPLY", the entire content of which is incorporated herein by reference.

### TECHNICAL FIELD

The present application relates to the field of energy storage technologies, and in particular, to a pre-charge circuit and an energy storage power supply.

### BACKGROUND

In the field of switching power supplies such as energy storage inverters, pre-charge circuits for energy storage elements play an important role in application scenarios such as an input port circuit of a battery, a photovoltaic (PV) input/output circuit (high/low voltage circuit), and an inverter high-voltage bus (BUS) circuit of an inverter.

In the related art, a microcontroller unit (MCU) samples a bus voltage and a voltage of an energy storage element, and determines a voltage difference based on the bus voltage and the voltage of the energy storage element, so as to achieve the pre-charging of the energy storage element. However, this method requires a participation of the MCU for control, resulting in high hardware costs.

Therefore, how to reduce a hardware cost of the pre-charge circuit is an urgent technical problem to be solved.

### SUMMARY

Based on this, for the above technical problem, it is necessary to provide a pre-charge circuit and an energy storage power supply that can reduce the hardware cost.

In a first aspect, the present application provides a pre-charge circuit, including a power supply module, a power supply control module, a pre-charge module and a pre-charge control module connected in sequence. The power supply module and the pre-charge module are respectively connected to an energy storage element. The pre-charge control module is connected to the power supply module.

The pre-charge control module is configured to receive an input power supply and control conduction between a pre-charge path of the pre-charge module and the power supply control module based on the input power supply.

The pre-charge module is configured to pre-charge the energy storage element by the input power supply through the pre-charge path when both the pre-charge path and the power supply control module are conductive.

The power supply control module is configured to control a power supply path of the power supply module to be disconnected when the power supply control module is conductive, be in a disconnected state when a voltage received by the power supply control module is less than a preset voltage threshold, and control conduction of the power supply path of the power supply module through the pre-charge control module. The voltage received by the power supply control module is negatively correlated with a voltage of the energy storage element.

The power supply module is configured to supply power by the input power supply to the energy storage element through the power supply path when the power supply path is conductive.

In an embodiment, the power supply control module includes a first transistor. A gate of the first transistor is connected to the pre-charge path, a drain of the first transistor is connected to the pre-charge control module, and a source of the first transistor is grounded.

In an embodiment, the pre-charge path includes a second transistor. A base of the second transistor is connected to the pre-charge control module, an emitter of the second transistor is connected to the power supply control module, a collector of the second transistor is connected to a first end of the energy storage element, and a second end of the energy storage element is connected to the input power supply.

In an embodiment, the pre-charge module further includes a constant current unit, the constant current unit is respectively connected to the pre-charge path and the pre-charge control module.

The pre-charge control module is further configured to control complementary conduction between the pre-charge path and the constant current unit, so that the energy storage element is pre-charged by the input power supply through the pre-charge path when a pre-charge current is within a preset current range.

In an embodiment, the constant current unit includes a third transistor. A base of the third transistor is connected to the emitter of the second transistor, a collector of the third transistor is respectively connected to the base of the second transistor and the pre-charge control module, and an emitter of the third transistor is grounded.

In an embodiment, the pre-charge control module includes a fourth transistor and a control power supply. A base of the fourth transistor is configured to receive the input power supply, an emitter of the fourth transistor is connected to the control power supply, and a collector of the fourth transistor is respectively connected to the pre-charge path and the power supply path.

The pre-charge control module is further configured to control the fourth transistor to be in a conductive state when the input power supply is received, so as to control the conduction between the pre-charge path and the power supply control module through the fourth transistor.

In an embodiment, the pre-charge control module further includes a fifth transistor. A gate of the fifth transistor is connected to the input power supply, a drain of the fifth transistor is connected to the base of the fourth transistor, and a source of the fifth transistor is grounded.

The pre-charge control module is further configured to control the fifth transistor to be in a conductive state when the input power supply is received, so as to control the fourth transistor to be in a conductive state through the fifth transistor.

In an embodiment, the power supply path includes a sixth transistor. A drain of the sixth transistor is connected to the first end of the energy storage element, a source of the sixth transistor is grounded, and a gate of the sixth transistor is respectively connected to the power supply control module and the pre-charge control module.

In an embodiment, the power supply module further includes a time-delay capacitor. A first end of the time-delay capacitor is connected to the gate of the sixth transistor, and a second end of the time-delay capacitor is grounded.

In a second aspect, the present application further provides an energy storage power supply. The energy storage power supply includes an energy storage element and the pre-charge circuit according to any one of the above embodiments.

In the above pre-charge circuit and energy storage power supply, the pre-charge circuit includes a power supply module, a power supply control module, a pre-charge module and a pre-charge control module connected in sequence, the power supply module and the pre-charge module are respectively connected to an energy storage element, and the pre-charge control module is connected to the power supply module. The pre-charge control module is configured to receive an input power supply, and control conduction between a pre-charge path of the pre-charge module and the power supply control module based on the input power supply; the pre-charge module is configured to pre-charge the energy storage element by the input power supply through the pre-charge path when both the pre-charge path and the power supply control module are conductive; the power supply control module is configured to control a power supply path of the power supply module to be disconnected when the power supply control module is conductive, be in a disconnected state when a voltage received by the power supply control module is less than a preset voltage threshold, and control conduction of the power supply path of the power supply module through the pre-charge control module; and the power supply module is configured to supply power by the input power supply to the energy storage element through the power supply path when the power supply path is conductive. In this way, after the pre-charge control module receives the input power supply, the input power supply can automatically pre-charge the energy storage element through the pre-charge path. In addition, since the voltage received by the power supply control module is negatively correlated with the voltage of the energy storage element, when the voltage received by the power supply control module is less than the preset voltage threshold, the fact that neither the pre-charge path nor the power supply control module is conductive results in the input power supply no longer pre-charging the energy storage element through the pre-charge path, but instead supplying power normally to the energy storage element through the power supply path. In the above pre-charge circuit, pre-charging can be automatically started or terminated without MCU control, thus reducing the hardware cost of the pre-charge circuit.

The foregoing description is only an overview of the technical solution of the present application. It is intended to enable a clearer understanding of the technical means of the present application, so that it can be implemented in accordance with the content of the specification. Furthermore, in order to make the above and other purposes, features, and advantages of the present application more apparent and understandable, specific implementations of the present application are exemplified below.

### BRIEF DESCRIPTION OF THE DRAWINGS

In order to explain the technical solutions of the embodiments of the present application more clearly, the drawings required in the embodiments of the present application will be briefly introduced below. Apparently, the drawings described below are only some embodiments of the present application, and for those skilled in the art, other drawings can be obtained according to the drawings without creative work.
FIG. 1 is a schematic diagram of a pre-charge circuit in an embodiment.
FIG. 2 is a schematic diagram of a power supply control module in an embodiment.
FIG. 3 is a schematic diagram of a pre-charge path in an embodiment.
FIG. 4 is a schematic diagram of another pre-charge path in an embodiment.
FIG. 5 is a schematic diagram of a constant current unit in an embodiment.
FIG. 6 is a schematic diagram of a pre-charge control module in an embodiment.
FIG. 7 is a schematic diagram of a power supply module in an embodiment.
FIG. 8 is a schematic diagram of a connection of a pre-charge circuit in an embodiment.
FIG. 9 is a schematic diagram of a connection of another pre-charge circuit in an embodiment.
FIG. 10 is a schematic diagram of a connection of another pre-charge circuit in an embodiment.
FIG. 11 is a schematic diagram of an energy storage power supply in an embodiment.

### DETAILED DESCRIPTION OF THE EMBODIMENTS

The embodiments of the technical solution of the present application will be described in detail below with reference to the accompanying drawings. The following embodiments are only used to explain the technical solution of the present application more clearly, and thus are only examples, and cannot be used to limit the protection scope of the present application.

Unless otherwise defined, all technical and scientific terms used herein have the same meaning as commonly understood by those skilled in the art to which the present application belongs. The terms used herein are only for the purpose of describing specific embodiments, and are not intended to limit the present application. The terms "include/comprise" and "have" and any variations thereof in the specification and claims of the present application and the description of the above drawings are intended to cover non-exclusive inclusion.

In the description of the embodiments of the present application, the technical terms "first", "second" and the like are only used to distinguish different objects, and cannot be understood as indicating or implying relative importance, or implicitly indicating the number, specific order or primary-secondary relationship of the indicated technical features. In the description of the embodiments of the present application, the meaning of "a plurality of" is two or more, unless otherwise clearly and specifically defined.

Reference to "an embodiment" herein means that a specific feature, structure or characteristic described with reference to the embodiments can be included in at least one embodiment of the present application. The appearance of the phrase in various places in the specification does not necessarily refer to the same embodiment, nor is it an independent or alternative embodiment mutually exclusive with other embodiments. It is explicitly and implicitly understood by those skilled in the art that the embodiments described herein can be combined with other embodiments.

In the description of the embodiments of the present application, the term "and/or" is only a relational description of the associated objects, indicating that three relationships can exist, for example, A and/or B, may indicate: A exists alone, A and B exist simultaneously, and B exists alone. In addition, the character "/" in the present application generally indicates that the associated objects before and after are in an "or" relationship.

In the description of the embodiments of the present application, the term "a plurality of" refers to two or more (including two). Similarly, "a plurality of groups" refers to two or more groups (including two), and "a plurality of pieces" refers to two or more pieces (including two).

At present, the pre-charge circuit of an energy storage element in the related art usually adopts the following methods:
(1) After power-on, a path where a pre-charge resistor is located is conductive first, an input end pre-charges the energy storage element through the pre-charge resistor, and after the pre-charging is completed, the path where the pre-charge resistor is located is turned off, and normal operation begins. This method is simple in design and is usually applied to low-power and low-voltage energy storage products. However, first, this pre-charging method has no overvoltage protection, and the input voltage directly enters the subsequent circuit through the pre-charge resistor. Second, the selection of the pre-charge resistor is difficult, the pre-charge resistor needs to be a resistor with impact resistance. In an aspect, the pre-charging is slow when the resistance value of the pre-charge resistor is large. In another aspect, the power of the pre-charge resistor needs to be large when the resistance value is small, which increases both the size and cost of the pre-charge resistor. This approach offers no advantage for the scenario with multi-channel direct current (DC) inputs. Third, there is no overcurrent and overtemperature protection, which is easy to cause damage and has low safety.
(2) After power-on, the path where the pre-charge resistor is located is conductive first, the input end pre-charges the energy storage element through the pre-charge resistor. After the path where the pre-charge resistor is located is conductive, the input end provides a base voltage for a triode. When the base voltage reaches a conduction condition of the triode, the triode turns on, a coil of a relay is energized, and then the relay is closed, the pre-charge resistor is short-circuited, and the energy storage element completes pre-charging and enters normal operation. This method is not only simple in design but also can prevent overvoltage, and is usually applied to photovoltaic inverters and high-voltage energy storage products. However, first, the pre-charge circuit needs to adopt a relay with a large size, resulting in high cost, especially for the application scenario of multi-channel output design. Second, the switching of the relay generates noise. Third, the cycle life of the relay is short. Fourth, the selection of the pre-charge resistor is equally difficult. Fifth, there is no overcurrent and overtemperature protection, which is easy to cause damage and has low safety.
(3) An MCU is used to sample a bus voltage and a voltage of an energy storage element, and determine a voltage difference based on the bus voltage and the voltage of the energy storage element, so as to pre-charge the energy storage element through a pre-charge resistor. This approach, controlled by the MCU, solves the problems associated with using a relay, and is usually applied to photovoltaic inverters and high-voltage energy storage products. However, first, the MCU needs to sample the voltage across a capacitor and the bus voltage for voltage difference determination, which occupies significant MCU resources in the case of multi-channel design, requiring the selection of a higher-level chip and resulting in high cost. Second, the selection of the pre-charge resistor between the MCU and the input end remains difficult. Third, arranging the signal sampling circuit increases the difficulty of the printed circuit board (PCB) layout. Fourth, there is no overcurrent and overtemperature protection, which is easy to cause damage and has low safety.

Based on this, it is necessary to provide a better pre-charge circuit, which is described in detail below.

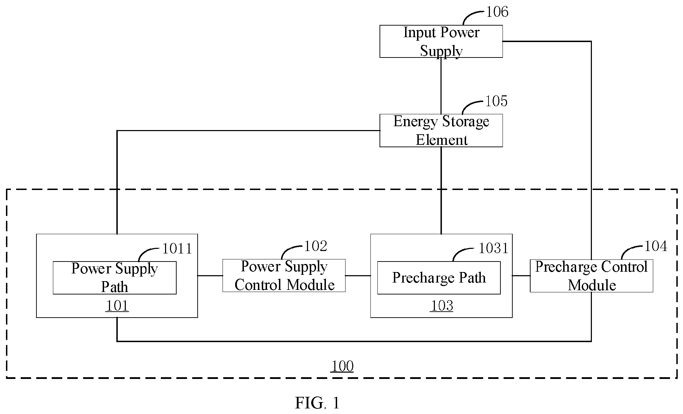

FIG. 1 is a schematic diagram of a pre-charge circuit in an embodiment. As shown in FIG. 1, the pre-charge circuit 100 includes a power supply module 101, a power supply control module 102, a pre-charge module 103 and a pre-charge control module 104 connected in sequence, the power supply module 101 and the pre-charge module 103 are respectively connected to an energy storage element 105, and the pre-charge control module 104 is connected to the power supply module 101.

The pre-charge control module 104 is configured to receive an input power supply 106, and control conduction between the power supply control module 102 and a pre-charge path 1031 of the pre-charge module 103 based on the input power supply 106.

The input power supply 106 is configured to provide a pre-charge voltage for the pre-charge circuit 100. It can be understood that the input power supply 106 is connected to the energy storage element 105, so as to achieve the subsequent pre-charging for the energy storage element 105. The input power supply 106 can be set according to requirements. For example, the input power supply 106 can be a DC input power supply. The energy storage element 105 includes, but is not limited to, a capacitor.

The pre-charge module 103 includes a pre-charge path 1031. The pre-charge path 1031 can be implemented using a corresponding switch element. The switch element includes, but is not limited to, an Insulated Gate Bipolar Transistor (IGBT), a Metal-Oxide-Semiconductor Field-Effect Transistor (MOSFET), a relay, a diode or other mechanical switches. For example, the pre-charge path 1031 is conductive when the switch element in the pre-charge path 1031 is conductive, and the pre-charge path 1031 is disconnected when the switch element in the pre-charge path 1031 is turned off.

In some embodiments, the pre-charge control module 104 can detect an input current or an input voltage of the input power supply 106, and control conduction of the switch element of the pre-charge path 1031 when the input current or the input voltage is greater than a preset input threshold. For example, when the pre-charge circuit is applied to a photovoltaic input scenario, pre-charging operation of photovoltaic input under a weak voltage condition can be avoided. For another example, by controlling the conduction of the switch element of the pre-charge path 1031 when the input current or the input voltage is greater than the preset input threshold, an undervoltage protection function can be achieved.

In some embodiments, the power supply control module 102 can also include a corresponding switch element, and the switch element of the power supply control module 102 can be conductive accordingly when the pre-charge path 1031 is conductive.

In some embodiments, the pre-charge control module 104 can also be connected to the power supply control module 102, so that the pre-charge control module 104 can directly control conduction between the pre-charge path 1031 of the pre-charge module 103 and the power supply control module 102 when the input current or the input voltage is greater than a preset input threshold.

Thus, the pre-charge control module 104 can control conduction between the pre-charge path 1031 of the pre-charge module 103 and the power supply control module 102 based on the input power supply 106.

The pre-charge module 103 is configured to pre-charge the energy storage element 105 by the input power supply 106 through the pre-charge path 1031 when both the pre-charge path 1031 and the power supply control module 102 are conductive.

When both the pre-charge path 1031 and the power supply control module 102 are conductive, the input power supply 106 can pre-charge the energy storage element 105 through the pre-charge path 1031 because the pre-charge path 1031 is conductive. It can be understood that the voltage of the energy storage element 105 will gradually increase during the pre-charging of the energy storage element 105 through the pre-charge path 1031.

The power supply control module 102 is configured to control a power supply path 1011 of the power supply module 101 to be disconnected when the power supply control module 102 is conductive. The power supply control module 102 is in a disconnected state when a voltage received by the power supply control module 102 is less than a preset voltage threshold, and control conduction of the power supply path 1011 of the power supply module 101 through the pre-charge control module 104.

The power supply module 101 includes a power supply path 1011. Similarly, the power supply path 1011 can also be implemented using a corresponding switch element. For example, the power supply path 1011 is conductive when the switch element of the power supply path 1011 is conductive, and the pre-charge path 1031 is disconnected when the switch element of the power supply path 1011 is turned off. Thus, when the power supply control module 102 is conductive, the power supply control module 102 can control the switch element of the power supply path 1011 to turn off, so as to disconnect the power supply path 1011.

In other words, after the pre-charge control module 104 receives the input power supply 106, the pre-charge path 1031 of the pre-charge module 103 and the power supply control module 102 are conductive. In an aspect, the power supply control module 102 is conductive such that the power supply path 1011 of the power supply module 101 is disconnected. In another aspect, the input power supply 106 can pre-charge the energy storage element 105 through the pre-charge path 1031 when both the pre-charge path 1031 and the power supply control module 102 are conductive.

The power supply control module 102 can receive a corresponding voltage, and the voltage received by the power supply control module 102 is negatively correlated with the voltage of the energy storage element 105, i.e., the larger the voltage of the energy storage element 105 is, the smaller the voltage received by the power supply control module 102 is. In this way, when the voltage received by the power supply control module 102 is less than the preset voltage threshold, it also indicates that the voltage of the energy storage element 105 reaches a certain pre-charge voltage value, and thus the pre-charging of the energy storage element 105 can be terminated. The preset voltage threshold can be set according to actual requirements, and is not limited in this embodiment.

In addition, the power supply control module 102 is in a disconnected state when the voltage received by the power supply control module 102 is less than the preset voltage threshold. It can be understood that after the pre-charge control module 104 receives the input power supply 106, the input power supply 106 can automatically pre-charge the energy storage element 105 through the pre-charge path 1031. As the voltage of the energy storage element 105 reaches a certain pre-charge voltage value, the voltage received by the power supply control module 102 will be less than the preset voltage threshold, so that the power supply control module 102 is disconnected. Moreover, since both the pre-charge path 1031 and the power supply control module 102 are not conductive, the input power supply 106 no longer pre-charges the energy storage element 105 through the pre-charge path 1031, thereby terminating the pre-charging.

Thus, when the voltage received by the power supply control module 102 is less than the preset voltage threshold, the power supply control module 102 also controls the conduction of the power supply path 1011 of the power supply module 101 through the pre-charge control module 104. In some embodiments, the pre-charge control module 104 can control the conduction of the power supply path 1011 by controlling the switch element of the power supply path 1011.

The power supply module 101 is configured to supply power by the input power supply 106 to the energy storage element 105 through the power supply path 1011 when the power supply path 1011 is conductive. When the power supply path 1011 is conductive, in an aspect, the energy storage element 105 terminates pre-charging. In another aspect, the input power supply 106 supplies power to the energy storage element 105 through the power supply path 1011.

The above pre-charge circuit 100 includes a power supply module 101, a power supply control module 102, a pre-charge module 103 and a pre-charge control module 104 connected in sequence. The power supply module 101 and the pre-charge module 103 are respectively connected to an energy storage element 105. The pre-charge control module 104 is connected to the power supply module 101. The pre-charge control module 104 is configured to receive an input power supply 106, and control conduction between a pre-charge path 1031 of the pre-charge module 103 and the power supply control module 102 based on the input power supply 106. The pre-charge module 103 is configured to pre-charge the energy storage element 105 by the input power supply 106 through the pre-charge path 1031 when both the pre-charge path 1031 and the power supply control module 102 are conductive. The power supply control module 102 is configured to control a power supply path 1011 of the power supply module 101 to be disconnected when the power supply control module 102 is conductive, and the power supply control module 102 is configured to be in a disconnected state when a voltage received by the power supply control module 102 is less than a preset voltage threshold, and control conduction of the power supply path 1011 of the power supply module 101 through the pre-charge control module 104. The power supply module 101 is configured to supply power by the input power supply 106 to the energy storage element 105 through the power supply path 1011 when the power supply path 1011 is conductive. In this way, after the pre-charge control module 104 receives the input power supply 106, the input power supply 106 can automatically pre-charge the energy storage element 105 through the pre-charge path 1031. In addition, since the voltage received by the power supply control module 102 is negatively correlated with the voltage of the energy storage element 105, when the voltage received by the power supply control module 102 is less than the preset voltage threshold, the fact that neither the pre-charge path nor the power supply control module is conductive results in the input power supply 106 no longer pre-charging the energy storage element 105 through the pre-charge path 1031, but instead supplying power normally to the energy storage element 105 through the power supply path 1011. In the above pre-charge circuit 100, pre-charging can be automatically started or terminated without MCU control, thus reducing the hardware cost of the pre-charge circuit 100.

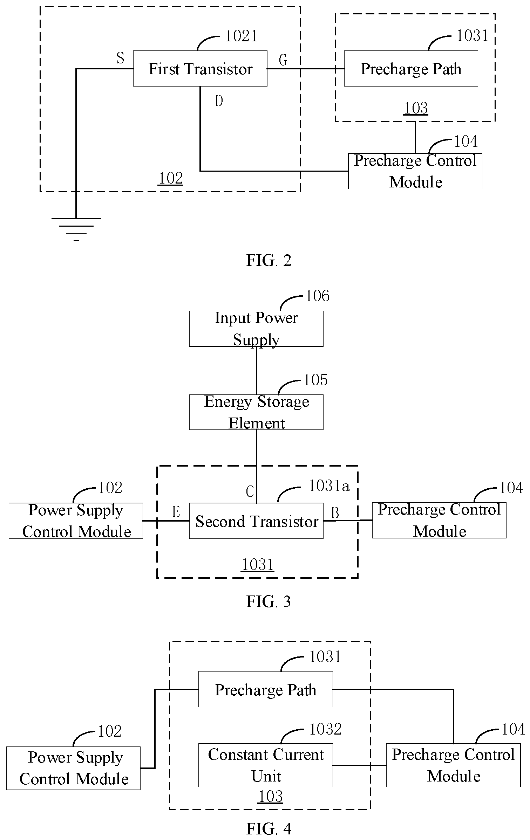

FIG. 2 is a schematic diagram of a power supply control module in an embodiment. In an exemplary embodiment, as shown in FIG. 2, the power supply control module 102 includes a first transistor 1021. A gate (G) of the first transistor 1021 is connected to the pre-charge path 1031, a drain (D) of the first transistor 1021 is connected to the pre-charge control module 104, and a source (S) of the first transistor 1021 is grounded.

In some embodiments, the pre-charge control module 104 can control the state of the power supply control module 102 through the first transistor 1021. The power supply control module 102 is conductive when the first transistor 1021 is in a conductive state. The power supply control module 102 is disconnected when the first transistor 1021 is in a cut-off state.

In some embodiments, the pre-charge control module 104 can control conduction of the power supply control module 102 through the first transistor 1021 when the pre-charge path 1031 is conductive.

In the above embodiment, since the power supply control module 102 includes the first transistor 1021, the gate of the first transistor 1021 is connected to the pre-charge path 1031, the drain of the first transistor 1021 is connected to the pre-charge control module 104, and the source of the first transistor 1021 is grounded, the pre-charge control module 104 can conduct the power supply control module 102 timely and accurately through the first transistor 1021 after receiving the input power supply 106.

FIG. 3 is a schematic diagram of a pre-charge path in an embodiment. In an exemplary embodiment, as shown in FIG. 3, the pre-charge path 1031 includes a second transistor 1031a. A base (B) of the second transistor 1031a is connected to the pre-charge control module 104, an emitter (E) of the second transistor 1031a is connected to the power supply control module 102, a collector (C) of the second transistor 1031a is connected to a first end of the energy storage element 105, and a second end of the energy storage element 105 is connected to the input power supply 106.

In some embodiments, the pre-charge control module 104 can control the state of the pre-charge path 1031 through the second transistor 1031a. The pre-charge path 1031 is conductive when the second transistor 1031a is in a conductive state. The pre-charge path 1031 is disconnected when the second transistor 1031a is in a cut-off state.

In some embodiments, the second transistor 1031a is configured to control the state of the power supply control module 102. The power supply control module 102 is conductive when the second transistor 1031a is in a conductive state. The power supply control module 102 is disconnected when the second transistor 1031a is in a cut-off state.

In the above embodiment, the pre-charge path 1031 includes the second transistor 1031a, the base of the second transistor 1031a is connected to the pre-charge control module 104, the emitter of the second transistor 1031a is connected to the power supply control module 102, the collector of the second transistor 1031a is connected to the first end of the energy storage element 105, and the second end of the energy storage element 105 is connected to the input power supply 106. Therefore, the pre-charge path 1031 and the power supply control module 102 can be conductive timely and accurately through the second transistor 1031a.

FIG. 4 is a schematic diagram of another pre-charge path in an embodiment. In an exemplary embodiment, as shown in FIG. 4, the pre-charge module 103 further includes a constant current unit 1032, and the constant current unit 1032 is respectively connected to the pre-charge path 1031 and the pre-charge control module 104.

The pre-charge control module 104 is further configured to control complementary conduction between the pre-charge path 1031 and the constant current unit 1032, so that the energy storage element 105 is pre-charged by the input power supply 106 through the pre-charge path 1031 when a pre-charge current is within a preset current range.

In other words, the constant current unit 1032 is disconnected when the pre-charge path 1031 is conductive. The constant current unit 1032 is conductive when the pre-charge path 1031 is disconnected. In some embodiments, complementary transistors can be respectively arranged in the pre-charge path 1031 and the constant current unit 1032 to realize the complementary conduction. For example, the pre-charge path 1031 includes an NPN transistor, and the constant current unit 1032 includes a PNP transistor.

Thus, through the complementary conduction between the pre-charge path 1031 and the constant current unit 1032, the input power supply 106 can pre-charge the energy storage element 105 through the pre-charge path 1031 when the pre-charge current is within the preset current range.

The pre-charge current refers to the current flowing through the energy storage element 105 during the pre-charging process. For example, the preset current range can include a first preset value and a second preset value. The first preset value is a lower limit of the preset current range, and the second preset value is an upper limit of the preset current range. When the pre-charge current is lower than the first preset value, the pre-charge path 1031 is conductive, the constant current unit 1032 is disconnected, and the input power supply 106 charges the energy storage element 105 through the pre-charge path 1031, causing the pre-charge current to gradually increase. When the pre-charge current reaches the second preset value, the pre-charge path 1031 is disconnected and the constant current unit 1032 is conductive, causing the pre-charge current to decrease. In this way, the pre-charge current can be kept within the preset current range.

In the above embodiment, the pre-charge module 103 further includes the constant current unit 1032, the constant current unit 1032 is respectively connected to the pre-charge path 1031 and the pre-charge control module 104, and the pre-charge control module 104 is further configured to control the complementary conduction between the pre-charge path 1031 and the constant current unit 1032, so that the energy storage element 105 is pre-charged by the input power supply 106 through the pre-charge path 1031 when the pre-charge current is within the preset current range. In this way, constant current pre-charging can be achieved through the constant current unit 1032, and the safety and reliability of pre-charging the energy storage element 105 are improved.

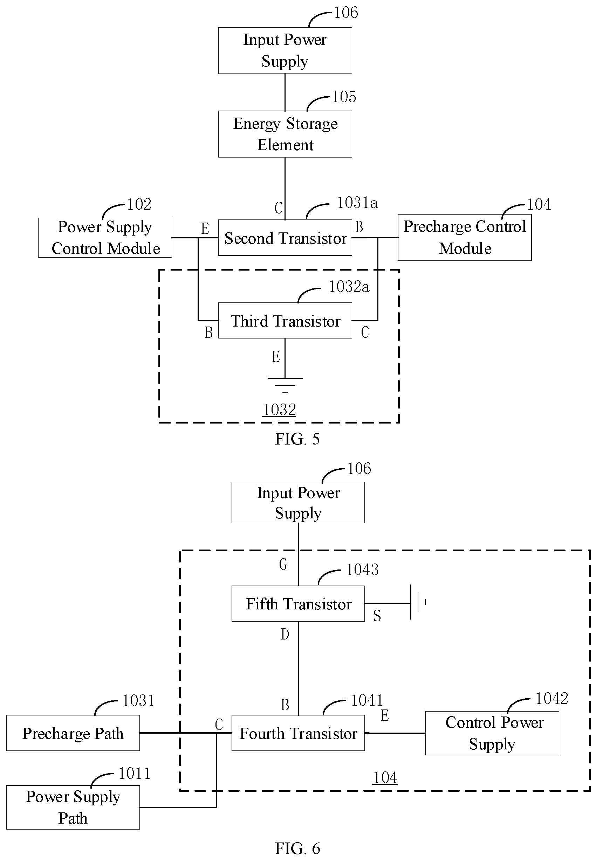

FIG. 5 is a schematic diagram of a constant current unit in an embodiment. In an exemplary embodiment, as shown in FIG. 5, the constant current unit 1032 includes a third transistor 1032a, a base of the third transistor 1032a is connected to the emitter of the second transistor 1031a, a collector of the third transistor 1032a is respectively connected to the base of the second transistor 1031a and the pre-charge control module 104, and an emitter of the third transistor 1032a is grounded.

In some embodiments, after receiving the input power supply 106, the pre-charge control module 104 controls conduction of the second transistor 1031a based on the input power supply 106. Since the second transistor 1031a is turned on, the potential at the base of the third transistor 1032a is pulled up, and thus the third transistor 1032a is also turned on. The conduction of the third transistor 1032a causes the second transistor 1031a to be cut off. After the second transistor 1031a is cut off, the third transistor 1032a is also cut off because the potential at the base is pulled down. Under the action of the input power supply 106, the second transistor 1031a is turned on again after the third transistor 1032a is cut off. This process is repeated, and the complementary conduction between the pre-charge path 1031 and the constant current unit 1032 is realized when the second transistor 1031a and the third transistor 1032a are complementarily conductive.

In some embodiments, the third transistor 1032a is in a cut-off state when the voltage received by the power supply control module 102 is less than the preset voltage threshold.

In the above embodiment, since the constant current unit 1032 includes the third transistor 1032a, the base of the third transistor 1032a is connected to the emitter of the second transistor 1031a, the collector of the third transistor 1032a is respectively connected to the base of the second transistor 1031a and the pre-charge control module 104, and the emitter of the third transistor 1032a is grounded, the complementary conduction can be realized through the second transistor 1031a and the third transistor 1032a, thereby realizing the constant current pre-charging.

FIG. 6 is a schematic diagram of a pre-charge control module in an embodiment. In an exemplary embodiment, the pre-charge control module 104 includes a fourth transistor 1041 and a control power supply 1042, a base of the fourth transistor 1041 is configured to receive the input power supply 106, an emitter of the fourth transistor 1041 is connected to the control power supply 1042, and a collector of the fourth transistor 1041 is respectively connected to the pre-charge path 1031 and the power supply path 1011. The control power supply 1042 can be set according to actual requirements, such as a 5 volt (V) power supply.

The pre-charge control module 104 is further configured to control the fourth transistor 1041 to be in a conductive state when the input power supply 106 is received, so as to control conduction between the pre-charge path 1031 and the power supply control module 102 through the fourth transistor 1041. In other words, after the pre-charge control module 104 receives the input power supply 106, the fourth transistor 1041 can be controlled to turn on under the action of the input power supply 106. Thus, when the fourth transistor 1041 is in a conductive state, the control power supply 1042 can control the conduction between the pre-charge path 1031 and the power supply control module 102 through the fourth transistor 1041.

Thus, the power supply path 1011 is disconnected when the power supply control module 102 is conductive, and the power supply path 1011 can be conductive through the fourth transistor 1041 and the control power supply 1042 when the voltage received by the power supply control module 102 is less than the preset voltage threshold.

In the above embodiment, since the pre-charge control module 104 includes the fourth transistor 1041 and the control power supply 1042, the base of the fourth transistor 1041 is configured to receive the input power supply 106, the emitter of the fourth transistor 1041 is connected to the control power supply 1042, and the collector of the fourth transistor 1041 is respectively connected to the pre-charge path 1031 and the power supply path 1011, the pre-charge control module 104 can control the fourth transistor 1041 to be in a conductive state when the input power supply 106 is received, so as to control the conduction between the pre-charge path 1031 and the power supply control module 102 through the fourth transistor 1041.

With continued reference to FIG. 6, in an exemplary embodiment, the pre-charge control module 104 further includes a fifth transistor 1043, a gate of the fifth transistor 1043 is connected to the input power supply 106, a drain of the fifth transistor 1043 is connected to the base of the fourth transistor 1041, and a source of the fifth transistor 1043 is grounded.

The pre-charge control module 104 is further configured to control the fifth transistor 1043 to be in a conductive state when the input power supply 106 is received, so as to control the fourth transistor 1041 to be in a conductive state through the fifth transistor 1043.

In other words, after receiving the input power supply 106, the pre-charge control module 104 first controls conduction of the fifth transistor 1043 through the input power supply 106, and the fifth transistor 1043 pulls up the potential of the base of the fourth transistor 1041, so that the fourth transistor 1041 is conductive with the fifth transistor 1043. Thus, the control power supply 1042 controls conduction between the pre-charge path 1031 and the power supply control module 102 through the fourth transistor 1041.

In the above embodiment, since the pre-charge control module 104 further includes the fifth transistor 1043, the gate of the fifth transistor 1043 is connected to the input power supply 106, the drain of the fifth transistor 1043 is connected to the base of the fourth transistor 1041, and the source of the fifth transistor 1043 is grounded, the pre-charge control module 104 can control the fifth transistor 1043 to be in a conductive state when the input power supply 106 is received, so as to control the fourth transistor 1041 to be in a conductive state through the fifth transistor 1043.

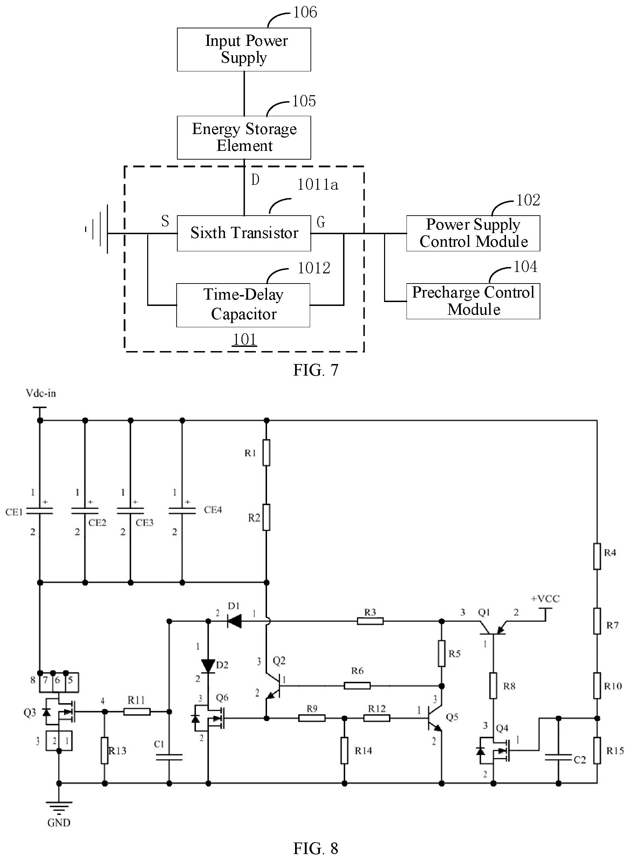

FIG. 7 is a schematic diagram of a power supply module in an embodiment. In an exemplary embodiment, as shown in FIG. 7, the power supply path 1011 includes a sixth transistor 1011a, a drain of the sixth transistor 1011a is connected to the first end of the energy storage element 105, a source of the sixth transistor 1011a is grounded, and a gate of the sixth transistor 1011a is respectively connected to the power supply control module 102 and the pre-charge control module 104.

The state of the power supply path 1011 can be controlled through the sixth transistor 1011a. The power supply path 1011 is conductive when the sixth transistor 1011a is in a conductive state, and the input power supply 106 supplies power to the energy storage element 105 through the power supply path 1011. The power supply path 1011 is disconnected when the sixth transistor 1011a is in a cut-off state.

In the above embodiment, since the power supply module 101 includes the sixth transistor 1011a, the drain of the sixth transistor 1011a is connected to the first end of the energy storage element 105, the source of the sixth transistor 1011a is grounded, and the gate of the sixth transistor 1011a is respectively connected to the power supply control module 102 and the pre-charge control module 104, the disconnection or conduction of the power supply path 1011 can be efficiently controlled through the sixth transistor 1011a.

With continued reference to FIG. 7, in an exemplary embodiment, the power supply module 101 further includes a time-delay capacitor 1012, a first end of the time-delay capacitor 1012 is connected to the gate of the sixth transistor 1011a, and a second end of the time-delay capacitor 1012 is grounded.

In the above embodiment, since the power supply module 101 further includes the time-delay capacitor 1012, the first end of the time-delay capacitor 1012 is connected to the gate of the sixth transistor 1011a, and the second end of the time-delay capacitor 1012 is grounded, the pre-charge path 1031 can be conductive prior to the power supply path 1011 under the action of the input power supply 106 through the time-delay capacitor 1012, thereby pre-charging the energy storage element 105 first.

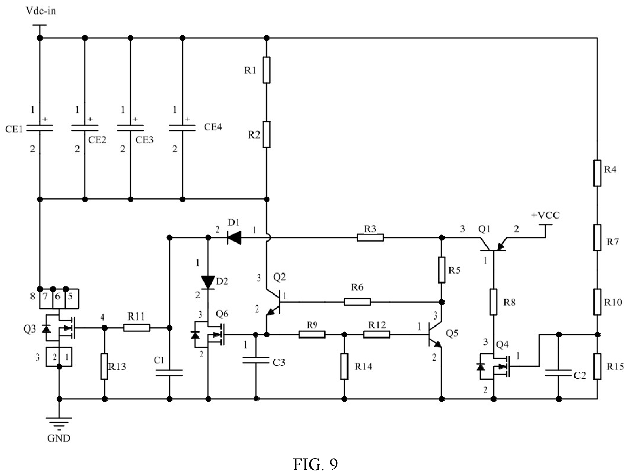

To introduce the pre-charge circuit 100 of the present application more clearly, it is described herein with reference to FIGS. 8 and 9. FIG. 8 is a schematic diagram of a connection of a pre-charge circuit in an embodiment. As shown in FIG. 8, Vdc-in refers to the input power supply 106. The energy storage element 105 includes a capacitor CE1, a capacitor CE2, a capacitor CE3 and a capacitor CE4, and the capacitors CE1 to CE4 can be capacitors on a bus. Q6 refers to the first transistor 1021, Q2 refers to the second transistor 1031a, Q5 refers to the third transistor 1032a, Q1 refers to the fourth transistor 1041, Q4 refers to the fifth transistor 1043, and Q3 refers to the sixth transistor 1011a. C1 refers to the time-delay capacitor 1012. VCC refers to the control power supply 1042.

A first end of each of the capacitors CE1 to CE4 is connected to both the drain of Q3 and the collector of Q2, and a second end of each of the capacitors CE1 to CE4 is connected to Vdc-in. Vdc-in is also connected to the gate of Q4, the source of Q4 is grounded, and the drain of Q4 is connected to the base of Q1. The emitter of Q1 is connected to VCC, the collector of Q1 is respectively connected to the drain of Q6 and the gate of Q3, the source of Q3 is grounded, and the source of Q6 is grounded. The base of Q2 is connected to the collector of Q5, and the emitter of Q2 and the base of Q5 are respectively connected to the gate of Q6. The emitter of Q5 is grounded. The first end of C1 is connected to the gate of Q3, and the second end of C1 is grounded.

With continued reference to FIG. 8, in some embodiments, the pre-charge circuit further includes a diode D1 and/or a diode D2, an anode of the diode D1 is connected to the collector of Q1, and a cathode of the diode D1 is respectively connected to the gate of Q3 and the drain of Q6. An anode of the diode D2 is connected to the collector of Q1, and a cathode of the diode D2 is connected to the drain of Q6.

In some embodiments, the pre-charge circuit can further include at least one of the following resistors R1 to R15.

(1) Resistor R1. A first end of the resistor R1 is connected to the first end of each of the capacitors CE1 to CE4, and a second end of the resistor R1 is connected to the second end of each of the capacitors CE1 to CE4. (2) Resistor R2. The second end of the resistor R1 is connected to the second end of each of the capacitors CE1 to CE4 through the resistor R2. (3) Resistor R3. The resistor R3 is arranged between the diode D1 and the collector of Q1. (4) Resistor R4. The resistor R4 is arranged between Vdc-in and the gate of Q4. (5) Resistor R5. The resistor R5 is arranged between the collector of Q1 and the base of Q2. (6) Resistor R6. The resistor R6 is arranged between the base of Q2 and the collector of Q1. (7) Resistor R7. The resistor R7 is arranged between Vdc-in and the gate of Q4. (8) Resistor R8. The resistor R8 is arranged between the base of Q1 and the drain of Q4. (9) Resistor R9. The resistor R9 is arranged between the emitter of Q2 and the base of Q5. (10) Resistor R10. The resistor R10 is arranged between Vdc-in and the gate of Q4. (11) Resistor R11. The resistor R11 is arranged between the first end of C1 and the gate of Q3. (12) Resistor R12. The resistor R12 is arranged between the emitter of Q2 and the base of Q5. (13) Resistor R13. A first end of the resistor R13 is connected to the gate of Q3, and a second end of the resistor R13 is grounded. (14) Resistor R14. A first end of the resistor R14 is arranged between the resistor R9 and the resistor R12, and a second end of the resistor R14 is grounded. (15) Resistor R15. A first end of the resistor R15 is connected to the gate of Q4, and a second end of the resistor R15 is grounded.

R9 and R14 are resistors for pre-charging. In some embodiments, the selection of R14 can be determined based on the pre-charge current and the parameters of Q5. For example, if the pre-charge current is 50 milliamperes (mA), R14 is selected as Vbe(Q5)/50mA, where Vbe refers to the voltage between the emitter and the base of Q5.

In some embodiments, the pre-charge circuit can further include a capacitor C2, a first end of the capacitor C2 is connected to the gate of Q4, and a second end of the capacitor C2 is grounded.

With continued reference to FIG.8, When Vdc-in is applied, the voltage is divided by R4, R7, R10, and R15. Once the divided voltage reaches a preset conduction threshold of Q4, Q4 is turned on, which in turn turns on Q1.

When Q1 is turned on, VCC controls Q2 to turn on through Q1. When Q2 is turned on, in an aspect, the capacitors CE1 to CE4 are pre-charged through Q2, R9 and R14 due to the setting of C1. In another aspect, the electric energy transmitted after Q2 is turned on also controls Q6 to turn on, thereby pulling down the potential of the gate of Q3 to control Q3 to be in a cut-off state.

In addition, when Q2 is turned on, the voltage at pin 2 of Q2, divided by R9 and R14, reaches the preset conduction threshold of Q5, thereby turning on Q5. The conduction of Q5 causes Q2 to be cut off. Thus, when Q2 is in a cut-off state, the potential of the base of Q5 is pulled down, and Q5 is in a cut-off state when the potential is pulled down below the preset conduction threshold of Q5. When Q5 is in a cut-off state, Q2 is turned on again. This cycle is repeated until the voltage of the capacitors CE1 to CE4 is charged to a certain pre-charge voltage value, so as to achieve a constant current pre-charging effect.

During the pre-charging of the capacitors CE1 to CE4, the voltage of the capacitors CE1 to CE4 will increase continuously, so that the potentials of both the collector and the emitter of Q2 are pulled down, i.e., the potential of pin 2 of Q2 will be pulled down continuously. When the potential of pin 2 of Q2 is less than the preset voltage threshold, i.e., when the voltage received by the power supply control module is less than the preset voltage threshold, the pre-charging of the capacitors CE1 to CE4 is completed. In this case, since the voltage of pin 2 of Q2 is pulled down below the preset conduction threshold of Q6 and Q5, both Q5 and Q6 are in a cut-off state.

When Q6 is in a cut-off state, VCC supplies power to the gate of Q3 through Q1 to turn on Q3, so that the capacitors CE1 to CE4 are supplied with power normally.

It should be noted that the above preset conduction threshold can be flexibly adjusted through the set resistors.

FIG. 9 is a schematic diagram of a connection of another pre-charge circuit in an embodiment. On the basis of the pre-charge circuit 100 shown in FIG.8, in some embodiments, the pre-charge circuit 100 can further include a capacitor C3. A first end of the capacitor C3 is arranged between the emitter of Q2 and the gate of Q6, and a second end of the capacitor C3 is grounded. Since the capacitor C3 is provided, Q6 can be reliably turned on through the capacitor C3.

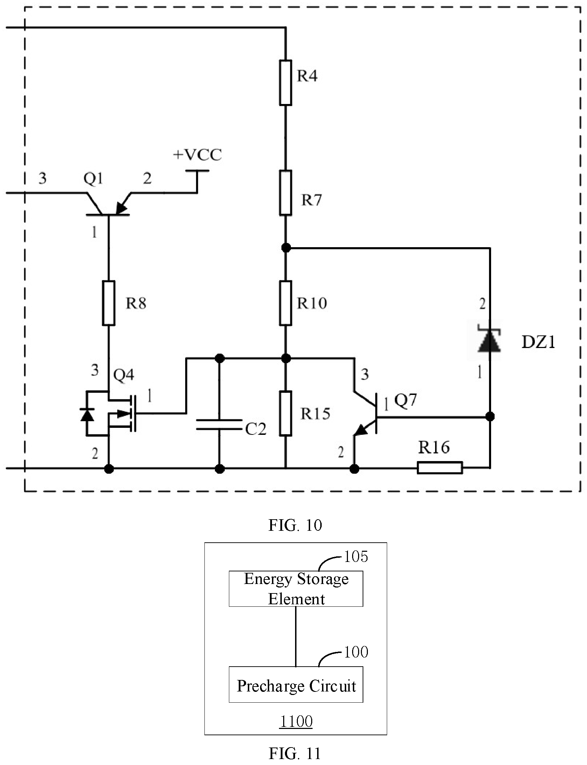

FIG. 10 is a schematic diagram of a connection of another pre-charge circuit in an embodiment. In some embodiments, on the basis of FIG. 8 or FIG. 9, the pre-charge circuit 100 can further include a transistor Q7 and a Zener diode DZ1. A base of the transistor Q7 is connected to an anode of the Zener diode DZ1, an emitter of the transistor Q7 is grounded, and a collector of the transistor Q7 is connected to the gate of Q4. A cathode of the Zener diode DZ1 is connected to Vdc-in.

In this way, if the input voltage corresponding to Vdc-in exceeds a certain input voltage threshold, the Zener diode DZ1 will be reversely broken down, and the transistor Q7 is controlled to be in a conductive state, so as to control Q4 to be in a cut-off state through the transistor Q7, thereby realizing an overvoltage protection function of the pre-charge circuit 100.

In some embodiments, the pre-charge circuit 100 can further include a resistor R16, a first end of the resistor R16 is connected to the emitter of the transistor Q7, and a second end of the resistor R16 is connected to the base of the transistor Q7.

FIG. 11 is a schematic diagram of an energy storage power supply in an embodiment. As shown in FIG. 11, in an embodiment, an energy storage power supply 1100 is further provided, and the energy storage power supply 1100 includes an energy storage element 105 and the pre-charge circuit 100 according to any one of the above embodiments.

Those skilled in the art can understand that all or part of the processes in the methods of the above embodiments can be completed by instructing the relevant hardware through a computer program, and the computer program can be stored in a non-transitory computer-readable storage medium. When the computer program is executed, the processes of the above method embodiments can be included. Any reference to a memory, a database or other media used in the various embodiments provided in the present application can include at least one of a non-transitory memory and a transitory memory. The non-transitory memory can include a Read-Only Memory (ROM), a magnetic tape, a floppy disk, a flash memory, an optical memory, a high-density embedded non-transitory memory, a Resistive Random Access Memory (ReRAM), a Magnetoresistive Random Access Memory (MRAM), a Ferroelectric Random Access Memory (FRAM), a Phase Change Memory (PCM), a graphene memory and the like. The transitory memory can include a Random Access Memory (RAM) or an external high-speed cache memory and the like. As an illustration rather than a limitation, the RAM can be in various forms, such as a Static Random Access Memory (SRAM) or a Dynamic Random Access Memory (DRAM). The database involved in the various embodiments provided in the present application can include at least one of a relational database and a non-relational database. The non-relational database can include a distributed database based on a blockchain, and the like, without limitation. The processor involved in the various embodiments provided in the present application can be a general-purpose processor, a Central Processing Unit (CPU), a Graphics Processing Unit (GPU), a Digital Signal Processor (DSP), a programmable logic device, a data processing logic device based on quantum computing, an Artificial Intelligence (AI) processor and the like.

Those skilled in the art can combine the technical features of the above embodiments arbitrarily. For the sake of concise description, not all possible combinations of the technical features in the above embodiments are described. However, as long as there is no contradiction in the combination of these technical features, they should be regarded as the scope recorded in the present application.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments, or equivalently replace some or all of the technical features. These modifications or replacements do not make the essence of the corresponding technical solutions deviate from the scope of the technical solutions of the embodiments of the present application, and all of them should be included in the scope of the claims and the description of the present application. In particular, as long as there is no structural conflict, the technical features mentioned in the various embodiments can be combined in any manner. The present application is not limited to the specific embodiments disclosed in the text, but includes all technical solutions falling within the scope of the claims.

## Claims

1. A pre-charge circuit, comprising a power supply module, a power supply control module, a pre-charge module, and a pre-charge control module connected in sequence, the power supply module and the pre-charge module being respectively connected to an energy storage element, and the pre-charge control module being connected to the power supply module; wherein:
the pre-charge control module is configured to receive an input power supply and control conduction between a pre-charge path of the pre-charge module and the power supply control module based on the input power supply;
the pre-charge module is configured to pre-charge the energy storage element by the input power supply through the pre-charge path when both the pre-charge path and the power supply control module are conductive;
the power supply control module is configured to: control a power supply path of the power supply module to be disconnected when the power supply control module is conductive, be in a disconnected state when a voltage received by the power supply control module is less than a preset voltage threshold, and control conduction of the power supply path of the power supply module through the pre-charge control module, the voltage received by the power supply control module being negatively correlated with a voltage of the energy storage element; and
the power supply module is configured to supply power by the input power supply to the energy storage element through the power supply path when the power supply path is conductive.

2. The circuit according to claim 1, wherein the power supply control module comprises a first transistor, a gate of the first transistor is connected to the pre-charge path, a drain of the first transistor is connected to the pre-charge control module, and a source of the first transistor is grounded.

3. The circuit according to claim 1 or 2, wherein the pre-charge path comprises a second transistor, a base of the second transistor is connected to the pre-charge control module, an emitter of the second transistor is connected to the power supply control module, a collector of the second transistor is connected to a first end of the energy storage element, and a second end of the energy storage element is connected to the input power supply.

4. The circuit according to any one of claims 1 to 3, wherein the pre-charge module further comprises a constant current unit, and the constant current unit is respectively connected to the pre-charge path and the pre-charge control module; and
the pre-charge control module is further configured to control complementary conduction between the pre-charge path and the constant current unit, so that the energy storage element is pre-charged by the input power supply through the pre-charge path when a pre-charge current is within a preset current range.

5. The circuit according to claim 4, wherein the constant current unit comprises a third transistor, a base of the third transistor is connected to the emitter of the second transistor, a collector of the third transistor is respectively connected to the base of the second transistor and the pre-charge control module, and an emitter of the third transistor is grounded.

6. The circuit according to any one of claims 1 to 5, wherein the pre-charge control module comprises a fourth transistor and a control power supply, a base of the fourth transistor is configured to receive the input power supply, an emitter of the fourth transistor is connected to the control power supply, and a collector of the fourth transistor is respectively connected to the pre-charge path and the power supply path; and
the pre-charge control module is further configured to control the fourth transistor to be in a conductive state when the input power supply is received, so as to control the conduction between the pre-charge path and the power supply control module through the fourth transistor.

7. The circuit according to claim 6, wherein the pre-charge control module further comprises a fifth transistor, a gate of the fifth transistor is connected to the input power supply, a drain of the fifth transistor is connected to the base of the fourth transistor, and a source of the fifth transistor is grounded; and
the pre-charge control module is further configured to control the fifth transistor to be in a conductive state when the input power supply is received, so as to control the fourth transistor to be in a conductive state through the fifth transistor.

8. The circuit according to any one of claims 1 to 7, wherein the power supply path comprises a sixth transistor, a drain of the sixth transistor is connected to a first end of the energy storage element, a source of the sixth transistor is grounded, and a gate of the sixth transistor is respectively connected to the power supply control module and the pre-charge control module.

9. The circuit according to claim 8, wherein the power supply module further comprises a time-delay capacitor, a first end of the time-delay capacitor is connected to the gate of the sixth transistor, and a second end of the time-delay capacitor is grounded.

10. An energy storage power supply, comprising an energy storage element and the pre-charge circuit according to any one of claims 1 to 9.
